# EUROPEAN PATENT APPLICATION

(11) **EP 4 675 390 A1**
(43) Date of publication of application: **07.01.2026**
(21) Application number: 25184476.7
(22) Date of filing: 23.06.2025
(51) Int. Cl.: G05D 11/00

(54) **AUTOMATED MIXING APPARATUS FOR MIXING TWO FLUID**

(30) Priority: 02.07.2024 IT 202400015226
(71) Applicant: C.M.S. Trading Srl, 26040 Cella Dati (CR) (IT)
(72) Inventor: Lucchini, Francesca, 26040 Cella Dati (CR) (IT); Rozzoni, Francesco, 26040 Cella Dati (CR) (IT); Zanotta, Marcello, 26040 Cella Dati (CR) (IT)
(74) Representative: Fisauli, Beatrice A. M.

(57) **Abstract**

The invention relates to an automated mixing apparatus (100) which can be associated in use with a first tank (1) containing a first fluid substance (A) and a second tank (2) containing a second fluid substance (B), comprising: - a mixing vessel (3) adapted to contain a disinfectant mixture (M) of said first (A) and second (B) fluid substances; - the first (4) and second (5) ducts hydraulically connected to said first (1) and second (2) tanks; - a first positive displacement pump (6) adapted to pump said first fluid substance (A), taking it from said first tank (1), and a second positive displacement pump (7) adapted to pump said second fluid substance (B), taking it from the second tank (2); - a programmable control unit adapted to control the operation of said positive displacement pumps at each work cycle. The first duct (4) is adapted to connect the first tank (1) directly to the mixing vessel (3), and the first positive displacement pump (6) is adapted to pump the first fluid substance (A) directly into the mixing vessel (3); the second duct (5) is adapted to connect the second tank (2) directly to the mixing vessel (3) and the second positive displacement pump (7) is adapted to pump the second fluid substance (B) directly into the mixing vessel (3). The positive displacement pumps (6, 7) can be programmed independently of each other so that, after having set the respective working time corresponding to the dosage of a precise quantity of said first and second fluid substances (A, B) during the calibration step of the apparatus by means of said command and control unit, they automatically dispense the correct quantity of fluid substances (A, B) at each working cycle to create, directly in the mixing vessel (3), the disinfectant mixture (M).

## Description

### Technical field of application

The present invention is aimed at the livestock sector and relates to an automated apparatus for mixing two fluid substances, typically with different viscosities and/or densities, to be used, for example, in the pre- and post-milking phases, for the application of a disinfectant mixture for the hygiene of the udders of dairy cows.

### Prior art

In the pre- and post-milking phases, a hygiene treatment of the udders of dairy cows is foreseen with a disinfectant mixture obtained, in the moment, from the combination of two fluid substances with different viscosities and densities, i.e. a base product and a product called an "activator", which must be mixed in an appropriate dosage ratio as a function of their composition and the instructions provided by the producer.

Currently, the most commonly used mixing technique for the two fluid substances is manual mixing: the operator takes the fluid substances, i.e., a base product and an activator, from two drums provided with a dispenser and pours them into a glass container, provided with a small cup, in which the disinfectant mixture is obtained. From said glass container, the disinfectant mixture is then applied, through said cup, directly to the cows' teats.

The manual mixing technique has numerous limitations and disadvantages:
- the two fluid substances cannot be dosed precisely, and a reduced dose of activator could cause the mixture to not correctly carry out the disinfectant function, with the risk of causing mastitis, and/or transferring bacteria into the collected milk;
- the fluid substances are subject to contamination from the external environment; in fact, the manual mixing of fluid substances occurs directly in the milking parlour, where the cows usually enter still dirty;
- the operator simultaneously carries out the preparatory step of the mixture in said glass containers and the step of applying it to the udders, and at the same time also carries out other preparatory operations on the animals in the room before applying said mixture, thus contaminating his/her hands which can thus convey particles loaded with bacteria;
- the mixing operations are entirely entrusted to an operator and subject to his/her dexterity, practicality and speed of execution.

Automatic mixing equipment is also known on the market which comprise:
- a first tank containing a first fluid substance;
- a second tank containing a second fluid substance;
- a first intermediate vessel adapted to temporarily accommodate a certain quantity of said first fluid substance;
- a second intermediate vessel adapted to temporarily accommodate a certain quantity of said second fluid substance;
- a mixing vessel adapted to contain a disinfectant mixture of said first and second fluid substances;
- a dispensing tool for said disinfectant mixture, hydraulically connected to said mixing vessel;
- a first connecting duct between said first tank and said first intermediate vessel and a first outflow connection between said first intermediate vessel and said mixing vessel;
- a second connecting duct between said second tank and said second intermediate vessel and a second outflow connection between said second intermediate vessel and said mixing vessel;
- a first positive displacement pump arranged along said first duct and adapted to pump said first fluid substance from said first tank into said first intermediate vessel;
- a second positive displacement pump arranged along said second duct and adapted to pump said second fluid substance from said second tank into said second intermediate vessel;
- a first and a second solenoid valve respectively arranged on said first and second outflow connection, and adapted, when activated, to allow the passage of fluid substances from the respective intermediate vessels to the mixing vessel;
- a first, a second and a third electrode immersed in each of said vessels, or in said intermediate vessels and in said mixing vessel, respectively having the function of controlling the maximum fill level of the vessel in which they are immersed, the function of controlling the minimum fill level of the vessel in which they are immersed, and a safety function for the possible malfunction of the other two electrodes; and
- a programmable command and control unit, adapted to command the actuation of said first and second positive displacement pumps and said first and second solenoid valves at each work cycle based on the levels detected in said intermediate vessels and in said mixing vessel, and provided with a control panel for the components of said mixing apparatus.

Such automatic mixing equipment has significant disadvantages due mostly to the use of electrodes, used as fluid level readers, which are totally immersed in the intermediate vessels and in the mixing vessel. In fact, these electrodes usually become affected by oxidation or corrosion within little time, rendering them ineffective, distorting the fill data reading, and causing the apparatus to malfunction. Their subsequent replacement by reinserting new electrodes in the intermediate vessels and the mixing vessel may not be performed correctly, due to incorrect positioning and with the risk of distorting the level readings.

The use of solenoid valves along the outflow connections, downstream of the intermediate vessels, is also ineffective: some fluid substances used, when the cycle is stopped, create gelatinous lumps that can clog the solenoid valves, causing the electronic control unit to fail and blocking the entire apparatus.

Furthermore, the positive displacement pumps used do not provide any control over the respective supply voltage, the accidental variation of which can alter the quantity of fluid substances dispensed, creating dosing problems.

In some cases, the paths followed by the fluid substances before reaching the mixing vessel are long and at risk of contamination and dispersion.

Finally, such equipment is complex to construct and uses numerous components, making it more expensive to both manufacture and maintain.

### Presentation of the invention

The main object of the invention is therefore to create an automated apparatus for mixing two fluid substances, typically with different viscosities and/or densities, used to form a disinfectant mixture, which is precise in the dosing steps of such fluid substances, so that the animals are treated, throughout the application step, with a disinfectant mixture correctly dosed according to the producer's instructions.

Another object of the invention is to provide an apparatus that eliminates or reduces the risk of contamination of the substances used to form the disinfectant mixture.

The object of the invention is also to provide an apparatus that allows optimising working times, significantly reducing them, while increasing the quality of the final result after mixture application.

A further object of the invention is to create an apparatus that is simple to use, economical to construct and easy to maintain.

The objects are achieved with an automated apparatus for mixing two fluid substances which can be associated in use with a first tank containing a first fluid substance and a second tank containing a second fluid substance, comprising:
- a mixing vessel adapted to contain a disinfectant mixture of said first and second fluid substances;
- a dispensing tool for said disinfectant mixture, hydraulically connected to said mixing vessel;

- a first duct hydraulically connected to said first tank;
- a second duct hydraulically connected to said second tank;
- a first positive displacement pump arranged along said first duct and adapted to pump said first fluid substance, taking it from said first tank;
- a second positive displacement pump arranged along said second duct and adapted to pump said second fluid substance, taking it from said second tank;
- a programmable control and command unit, adapted to command the actuation of said first and second positive displacement pumps at each work cycle, and provided with a control panel for the components of said mixing apparatus,
characterized in that:
- said first duct is adapted to connect said first tank directly to said mixing vessel and said first positive displacement pump is adapted to pump said first fluid substance from said first tank directly into said mixing vessel;
- said second duct is adapted to connect said second tank directly with said mixing vessel and said second positive displacement pump is adapted to pump said second fluid substance from said second tank directly into said mixing vessel,
where said positive displacement pumps are programmable independently of each other so that, after having set the respective working time corresponding to the dosage of a precise quantity of said first and second fluid substances during the calibration step of the apparatus, by means of said command and control unit, they automatically dispense at each working cycle the correct quantity of said fluid substances to create said disinfectant mixture, directly into said mixing vessel.

In the present description, the expression "directly" refers to the connection between the first and second tanks, the positive displacement pumps and the mixing vessel, meaning that no further components, such as valves or other measuring instruments, are interposed between the two elements.

In practice, only one positive displacement pump is interposed between each first and second tank and the mixing vessel.

Thereby, the possibility of stagnation of the two respective fluid substances and the potential formation of lumps is minimized, reducing both the risk of contamination of said fluid substances or of the mixture and of malfunctions during the preparation or dispensing step of the mixture.

According to the present invention, the command and control unit therefore comprises an initial calibration function for setting the respective working time corresponding to the dosage of a precise quantity of said first and second fluid substances.

The apparatus thus configured is particularly simple from a construction point of view, but equally reliable.

According to a preferred variant, the positive displacement pumps are peristaltic pumps. The use of such pumps allows for a further reduction in the formation of stagnation and residues in the path between the tanks and the mixing vessel and, furthermore, allows to avoid using control valves.

In a possible embodiment, said mixing apparatus comprises a three-way connection element, having two separate inlet ducts, each hydraulically connected to said first and second ducts, downstream of said first and second positive displacement pumps, and a common outlet duct, so as to receive the two fluid substances coming from the two ducts and dispense said disinfectant mixture directly into said mixing vessel from the outlet duct, hereinafter referred to as the "third way".

Advantageously, said three-way connection element comprises a double helix spiral, placed in the third way, adapted to facilitate the mixing of said two fluid substances.

According to an aspect of the invention, said mixing apparatus comprises a pressure transducer operatively connected to said mixing vessel and adapted to act as a maximum and minimum fill level sensor.

Said pressure transducer is placed near said command and control unit and is connected to said mixing vessel by means of a pressure sampling tube.

According to a variant of the invention, said mixing vessel can be hermetically sealed and said pressure transducer is of the differential barometric type.

According to a variant of the invention, the sampling tube is immersed in the mixture in the mixing vessel. According to such a variant, the pressure transducer is adapted to detect the level of the mixture present in the mixing vessel as a function of the hydrostatic pressure generated by the mixture in the vessel. In this variant, typically, the mixing vessel is not hermetically sealed.

According to another aspect of the invention, the mixing vessel is provided, preferably at the top, for example on a lid if provided, with a safety valve. This safety valve can intervene by discharging part of any gases formed above the free surface of the liquid following the mixing of the two substances, to limit the pressure in the mixing vessel.

According to a further aspect of the invention, said mixing apparatus comprises means for visually signalling when a pre-set maximum fill level has been exceeded in said mixing vessel.

In a preferred embodiment, said mixing apparatus comprises a third positive displacement pump hydraulically connected to said mixing vessel and adapted to pump, selectively controlled by said command and control unit, said disinfectant mixture of said first and second fluid substances towards a discharge point, at the end of a work shift.

Preferably, said mixing apparatus comprises a covering and protective casing at least for said mixing vessel, for said positive displacement pumps and for said command and control unit; where said casing comprises an opening to make the fill level of said mixing vessel visible from the outside.

Furthermore, LED lighting means are provided inside said casing to facilitate the visualization of the fill level of said mixing vessel.

According to a variant of the invention, said mixing apparatus can comprise an apparatus for measuring the supply voltage of said positive displacement pumps and a system for varying the working time of said positive displacement pumps correlated to the measured supply voltage value.

According to another preferred variant of the invention, the mixing apparatus can comprise a device for controlling the supply voltage of the positive displacement pumps.

Said voltage control device is configured to regulate and stabilize said supply voltage regardless of the actual mains voltage supplying the apparatus.

Said voltage control device can comprise, for example, a PWM controller associated with the command and control unit.

Thanks to such a configuration, it is possible to guarantee the dosing of fluid substances in an extremely precise manner. In fact, since the flow rate of positive displacement pumps is generally a function of the supply voltage, knowing the exact supply voltage and the pump activation time makes it possible to precisely know and replicate the dispensing of a given quantity of fluid substance.

Using the automated mixing apparatus according to the invention, the two fluid substances are taken directly and continuously from their respective tanks, without the operator having to touch them and therefore without any external contamination. They are then pumped, through a protected circuit, directly into a mixing vessel where they are mixed. The operator simply applies the disinfectant mixture through the dispensing tool directly in the milking parlour, ensuring that the disinfectant mixture is not subject to any external contamination, reducing the risk of bacterial contamination and consequently the risk of mastitis by 99%.

With respect to traditional mixing apparatuses, the apparatus according to the present invention does not have components at risk of wear and tear or clogging; in particular, the advantage of an apparatus free of electrodes, solenoid valves, and other instruments for measuring the level of fluid substances such as floats, sensors, probes, etc., allows for a direct and almost immediate flow of said fluid substances from their respective containment tanks to the mixing vessel in which the mixing occurs.

By appropriately programming the operating time of each positive displacement pump in the calibration step, the precise volume of each fluid substance is dispensed based on the desired dilution ratio.

In the variant comprising the voltage control device, the replicability and precision of the dispensing is also guaranteed, as the flow rate of the positive displacement pumps under the conditions of use is identical to that obtained during the calibration step.

Therefore, with the apparatus of the present invention, it is no longer necessary to measure the quantity of each fluid substance introduced into the mixing vessel with immersion electrodes, probes, floats, etc., but the positive displacement pumps themselves correctly dose the fluid substances.

The three-way connection element arranged at the inlet of the mixing vessel promotes the mixing of the two fluid substances just before they are poured into the mixing vessel, thus making a perfectly activated and homogeneous mixture available when the dispensing tool is removed.

The minimum and maximum fill level of the mixing vessel is checked by a differential barometric pressure transducer: advantageously, said transducer is placed near said command and control unit with a single sampling tube connected to the top of said mixing vessel: said sampling tube is not affected by the disinfectant mixture and is therefore not susceptible to oxidation and obstruction problems.

Even in the variant in which the sampling tube is immersed in the liquid, the pressure transducer is still arranged so as not to come into contact with the mixture. This pressure transducer is in fact configured to measure the pressure of the volume of air present between said transducer and the free surface of the liquid rising in the sampling tube.

According to another aspect of the invention, to prevent the pumps, during the operating phase, from remaining activated even if one or both tanks are empty, the apparatus can also comprise a weighing system, for example using load cells. Such a weighing system is controlled by the command and control unit which activates or stops the pumps also based on the parameters detected by the weighing system.

In general, the apparatus for mixing two fluid substances according to the invention has numerous advantages, such as:
- the mixing is automated;
- the volume dispensed by the two positive displacement pumps is always repetitive and certain, as it is set during the calibration of the apparatus;
- the supply voltage of the positive displacement pumps is measured and used appropriately to vary the working time of the pumps themselves;
- the barometric pressure transducer is of the differential type, and therefore compensated with respect to the external atmospheric pressure;
- the mixing is instantaneous and fast and also allows for a significant reduction in the application times of the disinfectant mixture directly in the milking parlour;
- the mixing vessel can be emptied at the end of the work shift (although in the device of the present invention the circuit is configured to evacuate any lumps without any problems of lump blockage);
- the operator no longer has to worry about preparing the mixture, but is totally dedicated to caring for the cows;
- the resulting mixture is always correct and constant in the dosages of the two fluid substances, throughout the entire working cycle of the apparatus;
- the mixture is applied directly at the milking station in the milking parlour without the operator having to continually move elsewhere to prepare the mixture or periodically stop the machine to check that it is not blocked or to verify the correct dosage;
- the automated mixing operations significantly reduce the disinfection process time by 30-40%;
- the disinfection operation is more streamlined, precise and faster.

### Brief description of the drawings

The advantages of the invention will be more evident below, in which a preferred embodiment is described, by way of non-limiting example, and with the help of the figures where:

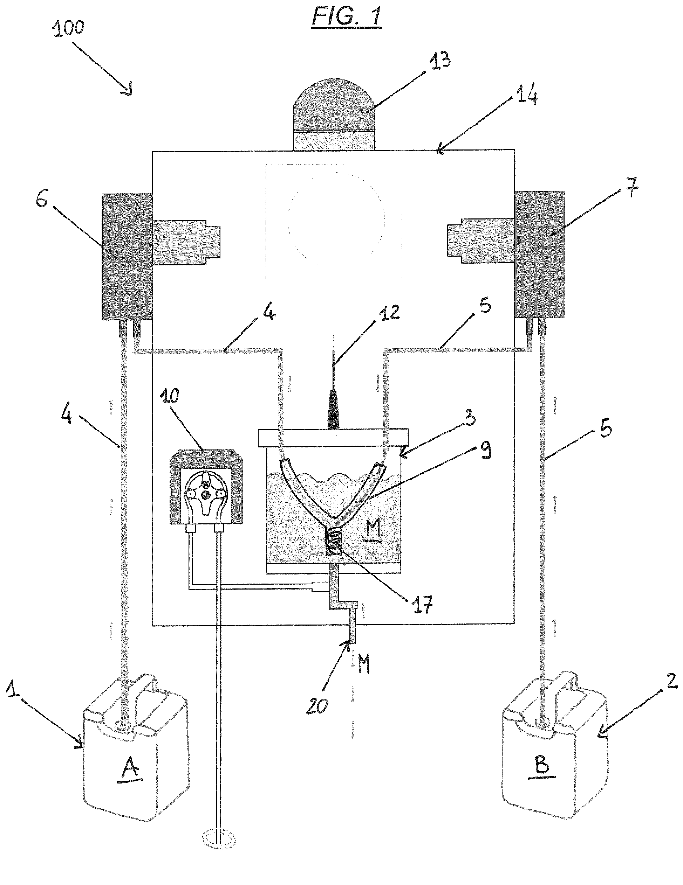

- Figures 1 and 2 illustrate, in a schematic front view, an automated apparatus for mixing two fluid substances according to the invention, during two possible operating phases;
- Figure 3 shows a front view of a detail of the automated mixing apparatus according to the invention.

### Detailed description of a preferred embodiment of the invention

With reference to the figures, an automated and instantaneous mixing apparatus 100 is illustrated for two fluid substances with chemical reaction (bi-component), which can have an equal dosage ratio of 1:1 or different from each other, depending on the characteristics and the producer's instructions.

Said automated mixing apparatus 100 which can be associated in use with a first tank 1 containing a first fluid substance A, for example a base product, and with a second tank 2 containing a second fluid substance B, for example an activator product, comprises:
- a mixing vessel 3, transparent and provided with a graduated scale, adapted to contain a disinfectant mixture M of said first A and second B fluid substances;
- a sampling point for said mixture M obtained directly on the bottom of said mixing vessel 3, to which a dispensing tool 20 can be hydraulically connected, for example of the gun type with immersion cup or nozzle gun;
- a first connecting duct 4 between said first tank 1 and said mixing vessel 3;
- a second connecting duct 5 between said second tank 2 and said mixing vessel 3;
- a first positive displacement pump 6 arranged along said first duct 4 and adapted to pump said first fluid substance A from said first tank 1 towards said mixing vessel 3;
- a second positive displacement pump 7 arranged along said second duct 5 and adapted to pump said second fluid substance B from said second tank 2 towards said mixing vessel 3;
- a three-way connection element 9 having two inlet ducts (not numbered), each hydraulically connected to said first 4 and second 5 ducts, and arranged at the inlet of said mixing vessel 3, and a common outlet duct;
- a programmable command and control unit, adapted to command the actuation of said first 6 and second 7 positive displacement pumps at each work cycle, and provided with a control panel 8 with control buttons and LCD display, adapted to manage the components of said mixing apparatus 100 and the programming and use of said control unit;
- a current transformer (not illustrated);
- a casing 14 for covering and protecting at least said mixing vessel 3, said positive displacement pumps 6, 7 and said control unit, made of IP61 fireproof material, with a hermetically sealed door;
- an ignition knob 16 positioned on the door of the casing 14.

The first 1 and second 2 tanks could, for example, directly be the drums or cans with which the two fluid substances A and B are supplied.

Said positive displacement pumps 6, 7 are peristaltic pumps; said mixing apparatus 100 comprises an apparatus for measuring the supply voltage for said positive displacement pumps 6, 7 and a control system adapted to act on the working time of said positive displacement pumps 6, 7 by correlating it to the measured supply voltage value.

The two fluid substances A, B are introduced and dosed by the respective positive displacement pumps 6, 7, simultaneously into the mixing vessel 3: said connection element 9 receives the two fluid substances A, B coming from the two ducts 4, 5 in each inlet duct and dispenses them through the outlet duct into said mixing vessel 3 directly in the form of disinfectant mixture M.

To improve the mixing of the two fluid substances A, B, a double helix spiral 17 is present inside said outlet duct of said connection element.

The first 4 and second 5 ducts both comprise, at one end immersed in the respective tank 1, 2, a dip filter (not shown), and a non-return valve (also not shown) placed near the dip filter.

The two fluid substances A, B are drawn directly from their respective containment tanks 1, 2, advantageously the supply cans or drums, to avoid external contamination.

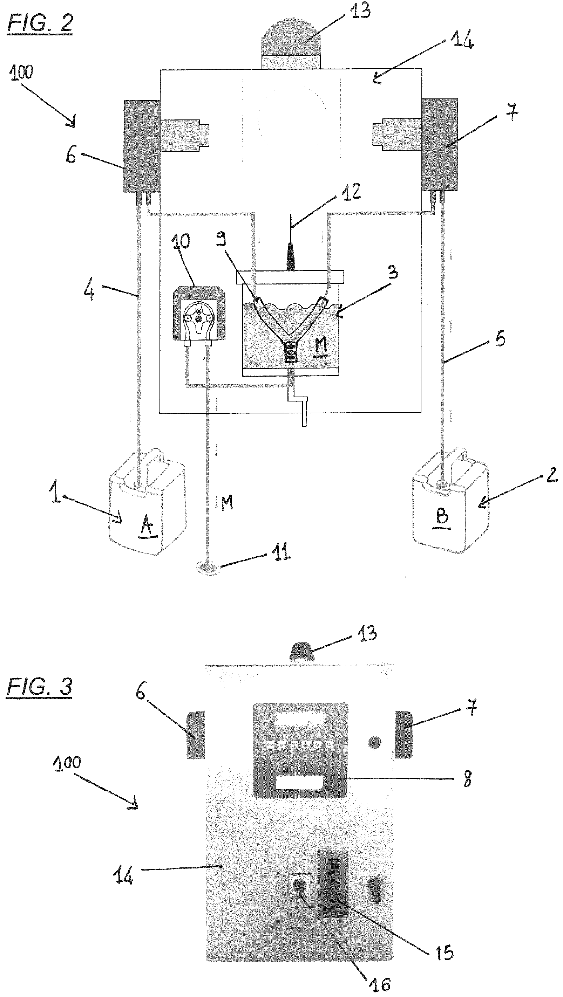

Said mixing apparatus 100 comprises a third positive displacement pump 10, selectively controlled by the command and control unit, associated with said mixing vessel 3, adapted to pump said disinfectant mixture M towards a discharge point 11 (Fig. 2).

Said third positive displacement pump 10 is a discharge pump positioned, for convenience, inside the casing 14, laterally to the mixing vessel 3, which can be actuated with a special command so as to evacuate any residual mixture M present in the mixing vessel 3 at the end of a work shift.

If the operator wishes to discharge the residual mixture M, which remains inside the mixing vessel 3, to prevent the product from deteriorating and the next work shift from being compromised by the mixture M remaining in the mixing vessel 3, he/she can do so directly by pressing the discharge button on the control panel 8. The third positive displacement pump 10 is stopped by a timer directly managed by the command and control unit.

Said mixing apparatus 100 comprises a pressure transducer, operatively connected to said mixing vessel 3, adapted to detect the reaching of a minimum or maximum fill level and of communicating accordingly with said command and control unit.

Said mixing vessel 3 is hermetically sealed and said pressure transducer is of the differential barometric type.

Said pressure transducer is placed near said command and control unit so as not to be immersed or in contact with the disinfectant mixture M, and is connected to said mixing vessel 3 by means of a pressure sampling tube 12 applied to the top of said mixing vessel 3, above the maximum fill level.

Said transducer detects, by difference with the atmospheric pressure, the air pressure between the free surface of the disinfectant mixture M and the top of the mixing vessel 3.

In a variant not illustrated, the sampling tube 12 is instead immersed in the mixture M present in the mixing vessel 3. As explained above, in this case the measurement of the level of the mixture in the vessel is performed by measuring the pressure of the air present in the sampling tube 12, which air is compressed more or less depending on the level of the mixture that rises in said sampling tube 12 by virtue of the hydrostatic pressure in the vessel. In this variant the mixing vessel 3 is not sealed.

When the pressure transducer detects a minimum fill level, the control unit commands a new work cycle and activates the positive displacement pumps 6, 7 to take the two fluid substances A, B from the respective tanks 1, 2 and pour them into the mixing vessel 3 to produce another disinfectant mixture M; when the pressure transducer detects a maximum fill level above a preset value, a light alarm signal is activated.

Among the functions of the mixing apparatus 100 according to the invention, a possible emergency stop is also included, which is activated if the fluid substances A, B exceed a set maximum fill level during the filling step of the mixing vessel 3. This can occur, for example, if the first 6 or second 7 positive displacement pump fails to stop. As a consequence of the emergency stop, said control unit activates said third positive displacement pump 10 to discharge the excess disinfectant mixture M in the mixing vessel 3.

Said mixing apparatus 100 comprises visual signalling means 13 for operating anomalies, for example a red emergency flashing light, when the maximum fill level detected by said pressure transducer has been reached in said mixing vessel 3 or if the weighing system, where included, should signal the condition of one or both tanks 1, 2 being empty.

For further safety, said casing 14 comprises, arranged on its door, an opening 15 to make the fill level of said mixing vessel 3 visible from the outside. To facilitate the visualization of said mixing vessel 3, LED lighting means are provided inside said casing 14.

The programming of the mixing apparatus 100 is an operation to be carried out before installation and does not require any changes until the fluid substances A, B to be mixed, or their mixing ratio, are replaced.

The manufacturer or a designated operator technician can program the control unit by setting the volume of liquid to be dispensed for each fluid substance A, B, for example based on its dosage ratio in the disinfectant mixture M and its viscosity, which corresponds to a specific working time of the respective positive displacement pump 6, 7. Thereby, at each work cycle, the exact quantity of each fluid substance A, B is pumped into the mixing vessel 3.

The initial calibration of the mixing apparatus 100 is performed on two fluid substances A, B independently, one after the other, possibly by emptying the mixing vessel 3 between the dosing operation of the first fluid substance A and the dosing operation of the second fluid substance B.

The calibration of the mixing apparatus 100 comprises the following operations:
I. activation of the first positive displacement pump 6;
II. flow of the first fluid substance A towards the mixing vessel 3;
III. stopping, carried out by the operator, the first positive displacement pump 6 upon reaching the desired dosage of the first fluid substance A; and
IV. storage of the "working time" data of the first positive displacement pump 6 by the command and control unit.

The same operations I.-IV. mentioned above are repeated for the second positive displacement pump 7 and the second fluid substance B.

The mixing apparatus 100 is ready for work cycles: once the working times of the positive displacement pumps 6, 7 have been set, the mixing apparatus 100 ensures the dispensing of the correct quantity of the individual fluid substances A, B at each work cycle without having to introduce further control elements.

The command and control unit is preferably configured to comprise a standard operating mode for preparing and dispensing the disinfectant mixture and a "programming" mode, preferably activated by entering a security command (e.g. a password) with which it is possible to program and/or calibrate the apparatus as described above.

According to a variant of the invention, during the dispensing step the supply voltage of the positive displacement pumps 6, 7 is checked, and if the value varies with respect to the value measured during the calibration step, the working time of the pumps is modified to compensate for the voltage variation.

In the variant in which the voltage control device is present, the positive displacement pumps are supplied with the same stabilized voltage value during both the calibration step and during normal operation. Thereby, by keeping the activation time of each positive displacement pump fixed, the dispensing of the exact quantity of the respective fluid substance is guaranteed.

The detection of the minimum level reached in mixing vessel 3 by the pressure transducer will provide the signal to the command and control unit to restart a new work cycle for loading the mixing vessel 3.

The detection of the maximum level reached in the mixing vessel 3 by the pressure transducer will provide the signal to the command and control unit to activate the third positive displacement pump 10 and proceed with discharging, signalling the problem with the flashing emergency light.

## Claims

1. Automated mixing apparatus (100) for two fluid substances which can be combined in use with a first tank (1) containing a first fluid substance (A) and a second tank (2) containing a second fluid substance (B), comprising:
- a mixing vessel (3) adapted to contain a disinfectant mixture (M) of said first (A) and second (B) fluid substances;
- a dispensing tool (20) for said disinfectant mixture (M) hydraulically connected to said mixing vessel (3);
- a first duct (4) hydraulically connected to said first tank (1);
- a second duct (5) hydraulically connected to said second tank (2);
- a first positive displacement pump (6) arranged along said first duct (4) and adapted to pump said first fluid substance (A), taking it from said first tank (1);
- a second positive displacement pump (7) arranged along said second duct (5) and adapted to pump said second fluid substance (B), taking it from said second tank (2);
- a programmable command and control unit adapted to command the operation of said first (6) and second (7) positive displacement pumps at each work cycle, and provided with a control panel (8) adapted to manage the components of said mixing apparatus (100) and the programming of said control unit,
**characterized in that**:
- said first duct (4) is adapted to connect said first tank (1) directly with said mixing vessel (3) and said first positive displacement pump (6) is adapted to pump said first fluid substance (A) from said first tank (1) directly into said mixing vessel (3);
- said second duct (5) is adapted to connect said second tank (2) directly with said mixing vessel (3) and said second positive displacement pump (7) is adapted to pump said second fluid substance (B) from said second tank (2) directly into said mixing vessel (3);
where said positive displacement pumps (6, 7) can be programmed independently of each other so that, after having set the respective working time corresponding to the dosage of a precise quantity of said first and second fluid substances (A, B) during the calibration step of the apparatus by means of said command and control unit, they automatically dispense at each working cycle the correct quantity of said fluid substances (A, B) to create, directly in said mixing vessel (3), said disinfectant mixture (M).

2. Automated mixing apparatus (100) according to claim 1, **characterized in that** it comprises a three-way connection element (9), having two separate inlet ducts, each hydraulically connected to said first (4) and second (5) ducts, downstream of said first (6) and second (7) positive displacement pumps, and a common outlet duct, so as to receive the two fluid substances (A, B) coming from the two ducts (4, 5) and to dispense said disinfectant mixture (M) directly from the outlet duct into said mixing vessel (3).

3. Automated mixing apparatus (100) according to claim 2, **characterized in that** said three-way connection element (9) comprises a double helix spiral (17) placed in the outlet duct adapted to facilitate the mixing of said two fluid substances (A, B).

4. Automated mixing apparatus (100) according to claim 1, **characterized in that** it comprises a pressure transducer operatively connected to said mixing vessel (3) and adapted to act as a maximum and minimum fill level sensor.

5. Automated mixing apparatus (100) according to claim 4, **characterized in that** said mixing vessel (3) is hermetically sealed and said pressure transducer is of the differential barometric type.

6. Automated mixing apparatus (100) according to claim 5, **characterized in that** said pressure transducer is placed near said command and control unit and is connected to said mixing vessel (3) by means of a pressure sampling tube (12), applied to said mixing vessel (3) above a maximum fill level.

7. Automated mixing apparatus (100) according to claim 4, **characterized in that** said pressure transducer is placed near said command and control unit and is connected to said mixing vessel (3) by means of a pressure sampling tube (12) immersed in the mixture (M) present in the mixing vessel (3).

8. Automated mixing apparatus (100) according to claim 4, **characterized in that** it comprises visual signalling means (13) of said mixing vessel (3) having exceeded a pre-set maximum fill level.

9. Automated mixing apparatus (100) according to claim 1, **characterized in that** it comprises a third positive displacement pump (10) hydraulically connected to said mixing vessel (3) and adapted to pump, selectively controlled by said command and control unit, said disinfectant mixture (M) of said first (A) and second (B) fluid substance towards a discharge point (11), at the end of a work shift.

10. Automated mixing apparatus (100) according to claim 1, **characterized in that** it comprises a casing (14) for covering and protecting at least said mixing vessel (3), said positive displacement pumps (6,7) and said control unit, where said casing (14) comprises an opening (15) to make the fill level of said mixing vessel (3) visible from the outside.

11. Automated mixing apparatus (100) according to claim 9, **characterized in that** inside said casing (14) LED lighting means are provided to facilitate the visualisation of the fill level of said mixing vessel (3).

12. Automated mixing apparatus (100) according to claim 1, **characterized in that** it comprises an apparatus for measuring the supply voltage for said positive displacement pumps (6, 7) and a system for varying the working time of said positive displacement pumps (6, 7) correlated to the measured supply voltage value.

13. Automated mixing apparatus (100) according to any one of the preceding claims, **characterized in that** said positive displacement pumps (6, 7) are peristaltic pumps.

14. Automated mixing apparatus (100) according to any one of the preceding claims, **characterized in that** the control and command unit comprises an initial calibration function for setting the respective working time of the positive displacement pumps (6, 7) corresponding to the dosage of a precise quantity of said first and second fluid substances (A, B).

15. Automated mixing apparatus (100) according to any one of the preceding claims, **characterized in that** it comprises a voltage control device configured to control and stabilize the supply voltage of the positive displacement pumps (6, 7).
